# DEMANDE DE BREVET EUROPEEN

(11) **EP 4 556 686 A1**
(43) Date de publication de la demande: **21.05.2025**
(21) Numéro de dépôt: 23306966.5
(22) Date de dépôt: 14.11.2023
(51) Int. Cl.: F01D 17/16, F01D 25/02

(54) **ENSEMBLE DE TURBOMACHINE COMPRENANT UNE AUBE DE STATOR À CALAGE VARIABLE ÉQUIPÉE D'UN ÉLÉMENT CHAUFFANT ET D'UN BOÎTIER DE CONNEXION**

(71) Demandeur: Safran Aero Boosters, 4041 Herstal (BE); SAFRAN AIRCRAFT ENGINES, 75015 Paris (FR)
(72) Inventeur: LAFONTAINE, Pierre, 4041 HERSTAL (BE); GALLET, Julien Philippe, 4041 HERSTAL (BE); BASSO, Francesco Saverio, 75015 PARIS (FR)
(74) Mandataire: Gevers & Orès

(57) **Abrégé**

L'invention concerne un ensemble de turbomachine d'axe longitudinal (X) pour aéronef, comprenant :
- une aube de stator (2) à calage variable comportant une pale (4) et un pivot (5) s'étendant radialement depuis la pale (4),
- un système de changement de pas (3) pour changer le calage de l'aube de stator, et
- un élément chauffant (26) comprenant une première portion (26a) montée au sein de la pale (4) et une deuxième portion (26b) reliée à une source d'alimentation électrique (30) d'un dispositif de connexion électrique (29).

Selon l'invention, le dispositif de connexion électrique (29) comprend un boîtier de connexion (31) reliant la deuxième portion à un harnais d'alimentation (32a, 32b) qui est couplé à la source d'alimentation électrique et le pivot comprend un alésage principal (33) dans lequel sont logés le boîtier de connexion (31) solidaire en rotation du pivot et la deuxième portion (26b).

## Description

### Domaine technique de l'invention

La présente invention concerne le domaine aéronautique, notamment la propulsion d'aéronef. Elle vise en particulier une aube de stator à calage variable équipée d'un élément chauffant et d'un boîtier de connexion.

### Arrière-plan technologique

De nombreuses turbomachines, telles des turboréacteurs ou des turbopropulseurs, sont équipées d'aubes de stator à calage variable. Les aubes de stator à calage variable sont disposées autour de l'axe longitudinal de la turbomachine et sont placées généralement en amont ou en aval d'aubes rotoriques, suivant la circulation des gaz dans la turbomachine, afin d'orienter le flux d'air en sortie ou vers ces aubes rotoriques dans le bon angle. Le calage leur permet de s'adapter à divers régimes de la turbomachine. A cet effet, les aubes de stator à calage variable sont reliées à un système de changement de pas qui est configuré de manière à faire varier les calages ou inclinaisons de celles-ci autour de leur axe de calage pendant un vol.

Les aubes de stator peuvent équiper un compresseur de la turbomachine. Le système de changement de pas comprend un anneau de commande centré sur l'axe longitudinal et plusieurs leviers qui sont reliés chacun à un pivot d'une aube de stator et à l'anneau de commande. Chaque pivot est monté dans un logement correspondant d'un carter de la turbomachine à l'aide de douilles.

Les aubes de stator peuvent être soumises à la formation de givre qui peut altérer leur fonctionnement et ainsi dégrader les performances de la turbomachine. Dans ce cas, les aubes de stator à calage variable ont été équipées d'éléments chauffants ayant une portion intégrée dans chaque pale des aubes de stator. Chaque élément chauffant est relié à un câble d'alimentation qui s'étend à l'extérieur de la pale au niveau de la base du pivot et qui est relié à un dispositif de connexion électrique situé, à l'extérieur de l'aube de stator dans une zone à proximité du système de changement de pas.

Les câbles d'alimentation présentent un surplus de longueur pour suivre le mouvement de rotation des aubes de stator lors du changement de calage mais qui peut interagir avec le système de changement de pas. Le dispositif de connexion électrique peut également se mouvoir lors de la rotation des aubes de stator. Des espaceurs ont été envisagés pour éviter les interactions, cependant il en résulte un encombrement important dans une zone déjà contrainte en termes d'espace disponible. En dépit de cela, une sollicitation et une déformation mécaniques des câbles d'alimentation entre les éléments chauffants en repère mobile, et le dispositif de connexion électrique en repère fixe sont inévitables. Cela impacte négativement la durabilité et la fiabilité des éléments chauffants.

Par ailleurs, l'assemblage électrique des éléments chauffants et le dispositif de connexion électrique est difficile à mettre en oeuvre de manière fiable une fois que les aubes de stator sont déjà installées dans la turbomachine à cause de l'espace restreint. Le montage du système de changement de pas et le réglage du calage des aubes de stator impliquent la réalisation de plusieurs opérations de serrage et/ou desserrage de pièces lesquelles nécessitent la sollicitation des câbles d'alimentation pouvant affecter leurs tenues mécaniques ainsi que celles de connecteurs électriques, de la fixation entre l'élément chauffant et le dispositif de connexion électrique ou de l'élément chauffant lui-même. Les éléments chauffants comprennent sur une partie de leur longueur une gaine isolante qui est rigide, fragile et sensible aux sollicitations mécaniques répétées ou extrêmes qui peuvent engendrer une rupture de ceux-ci. Les câbles d'alimentation des éléments chauffants comprennent généralement un isolant électrique qui est plus souple et présentent une meilleure résistance aux sollicitations répétées que les éléments chauffants. Le montage est également complexe car les câbles d'alimentation doivent traverser les douilles et les logements respectifs du carter de la turbomachine avant que les pivots ne soient engagés dans leurs logements.

A cela s'ajoute le fait que le transfert de chaleur des câbles d'alimentation des éléments chauffants vers l'extérieur est limité de par leurs expositions à l'air libre, le manque de refroidissement de leurs parties à l'air libre est un facteur limitant pour la puissance électrique circulant dans les câbles d'alimentation et diminue la densité de puissance qu'il est possible d'intégrer.

Il existe un besoin de résoudre tout ou partie des inconvénients précités.

### Résumé de l'invention

L'objectif de la présente invention est de fournir une solution simple, robuste et économique permettant de réduire, voire de supprimer les sollicitations mécaniques des moyens d'alimentation des moyens chauffants d'une aube de stator à calage variable en vue d'éviter la formation de givre tout en permettant un calage celle-ci.

Nous parvenons à cet objectif conformément à l'invention grâce à un ensemble de turbomachine d'axe longitudinal, en particulier d'aéronef, comprenant :
- une aube de stator à calage variable comportant une pale et un pivot s'étendant radialement depuis une extrémité de la pale,
- un système de changement de pas configuré de manière à changer le calage de l'aube de stator autour de son axe de calage, le pivot étant relié au système de changement de pas, et
- un élément chauffant comprenant une première portion montée au sein de la pale et une deuxième portion reliée à une source d'alimentation électrique d'un dispositif de connexion électrique,
le dispositif de connexion électrique comprenant un boîtier de connexion reliant la deuxième portion à au moins un harnais d'alimentation qui est couplé à la source d'alimentation électrique et en ce que le pivot comprend un alésage principal dans lequel sont logés d'une part le boîtier de connexion (31) de manière à être solidaire en rotation du pivot et d'autre part la deuxième portion prolongeant la première portion de l'élément chauffant.

Ainsi, cette solution permet d'atteindre l'objectif susmentionné. L'agencement du boîtier de connexion reliant la deuxième portion à une source d'alimentation électrique de l'élément chauffant réduit l'encombrement et les interactions de ceux-ci avec le système de changement de pas. Cette intégration d'au moins une partie de la connectique électrique à l'intérieur du pivot de l'aube de stator à calage variable est une solution simple et peu coûteuse. Le montage et démontage sont plus simples également car il n'y a pas de pliages répétés de la deuxième portion de l'élément chauffant pour installer l'aube de stator dans le carter de turbomachine et pour relier l'aube de stator au système de changement de pas. Le fait d'installer la deuxième portion de l'élément chauffant dans l'alésage du pivot permet de réduire la longueur de celle-ci, ce qui permet un gain de masse et de coût de fabrication. La durée de vie et la fiabilité de l'élément chauffant sont améliorées ainsi que celles du dispositif de connexion électrique. De plus, la totalité de l'élément chauffant est dans l'aube de stator ce qui implique que la déperdition de chaleur soit réduite à néant.

L'ensemble de turbomachine comprend également l'une ou plusieurs des caractéristiques et/ou étapes suivantes, prises seules ou en combinaison :
- le système de changement de pas comprend un anneau de commande et au moins un levier qui est solidarisé à une extrémité radialement externe du pivot au moyen d'au moins un organe de fixation et qui est relié à l'anneau de commande, l'anneau de commande étant destiné à être déplacé en rotation autour de l'axe longitudinal et à entraîner le changement de calage des aubes de stator.
- le harnais d'alimentation s'étend au moins en partie dans l'alésage principal et traverse un orifice du levier, le harnais d'alimentation présentant une section transversale égale à au moins deux fois une section transversale maximale de la deuxième portion de l'élément chauffant.
- l'élément chauffant est un fil chauffant et la deuxième portion de l'élément chauffant comprend le fil chauffant recouvert d'un matériau conducteur électrique.
- le pivot comprend un perçage s'étendant suivant un axe parallèle à l'axe de l'alésage principal, l'organe de fixation comprenant une tige filetée s'étendant au moins en partie dans le perçage et une douille filetée solidarisée à une face interne du perçage.
- le pivot comprend une gorge annulaire centrée sur l'axe de calage dans laquelle est engagé un anneau de rétention qui est également en butée radiale contre la face interne de l'orifice du levier.
- matériau de comblement occupe une portion de l'alésage principal s'étendant radialement en-dessous du boîtier de connexion et dans lequel s'étend la deuxième portion de l'élément chauffant.
- le levier comprend une gorge traversant sa paroi de part et d'autre radialement au niveau de sa première extrémité et qui est destinée à déboucher dans l'orifice (36) et à être traversée par le harnais d'alimentation.
- l'ensemble comprend une pluralité d'aubes de stator à calage variable disposées autour de l'axe longitudinal, chacun des pivots étant relié à l'anneau de commande et en ce que le dispositif de connexion comprenant plusieurs boîtiers de connexion reliant électriquement chacun une deuxième portion d'un élément chauffant et aux deux harnais d'alimentation, chaque harnais d'alimentation étant relié à un autre harnais d'alimentation d'un des boîtiers de connexion via un connecteur.
   - - l'alésage principal s'étendant coaxialement à l'axe de calage des aubes de stator.
   - - l'alésage principal s'étendant de manière inclinée par rapport à l'axe radial.
   - - l'alésage principal s'étendant parallèlement à l'axe de calage.
   - - l'alésage principal débouche à l'extrémité radialement externe du pivot et est agencé en regard de l'orifice traversant ménagé à la deuxième extrémité du levier.

L'invention concerne une turbomachine, en particulier d'aéronef, comprenant au moins un module de turbomachine présentant l'une quelconque des caractéristiques susmentionnées.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
- La figure 1 est une vue en perspective d'une aube de stator reliée à un système de changement de pas et équipée de moyens de dégivrage selon l'invention ;
- La figure 2 est une vue en perspective et en transparence d'un exemple de réalisation d'une aube de stator à calage variable reliée à un système de changement de pas et équipée de moyens de dégivrage selon l'invention ;
- La figure 3 est une vue en coupe transversale d'un exemple d'organe d'un système de changement de pas selon l'invention ;
- La figure 4 illustre en perspective un exemple d'étage d'aubes de stator à calage variable selon l'invention ;
- La figure 5 est une vue en perspective, partielle et de détails d'un organe d'un dispositif de connexion électrique des moyens de givrage équipant au moins une aube de stator selon l'invention.

### Description détaillée de l'invention

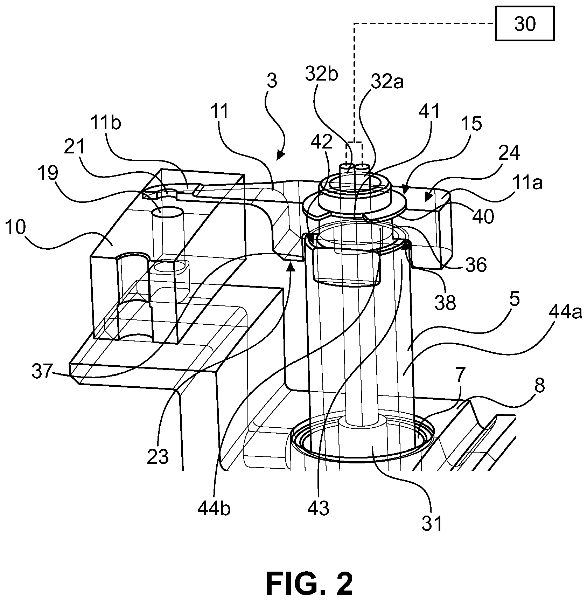

La figure 2 représente un ensemble pour une turbomachine 1 d'axe longitudinal X. La turbomachine est destinée à être montée sur un aéronef et peut être un turbomoteur, un turboréacteur, une turbosoufflante, ou encore comprendre des aubes mobiles de soufflante ou des aubes mobiles d'au moins une hélice qui soient carénées ou non carénées.

L'ensemble de turbomachine 1 comprend au moins une aube de stator 2 à calage variable qui est reliée à un système de changement de pas 3. Dans le présent exemple, plusieurs aubes de stator 2 sont réparties autour de l'axe longitudinal X. Le système de changement de pas 3 est configuré pour changer le calage d'au moins une aube de stator 2 en fonction du mode de fonctionnement de la turbomachine.

Dans la présente invention, nous entendons par le terme « aube de stator » ou « aube fixe », une aube qui n'est pas entraînée en rotation autour de l'axe longitudinal X de la turbomachine. En d'autres termes, l'aube de stator est distincte et contraire à une aube rotorique ou mobile de la turbomachine. Les aubes de stator et les aubes rotoriques sont agencées de manière générale sous forme de rangée annulaire et les rangées annulaires d'aubes de stator sont disposées en amont et/ou en aval des rangées annulaires d'aubes rotoriques suivant l'axe longitudinal X.

Dans la présente invention, et de manière générale, les termes « amont » et « aval » sont définis par rapport à la circulation des gaz ou des flux d'air dans la turbomachine et ici suivant l'axe longitudinal X. Les termes « axial » et « axialement » sont définis par rapport à l'axe longitudinal X. Les termes « externe », « extérieur », « intérieur », « interne » et « radial » sont définis par rapport à un axe radial Z qui s'étend depuis l'axe longitudinal X et au regard de l'éloignement par rapport à l'axe longitudinal X. L'axe radial est perpendiculaire à l'axe longitudinal X.

Dans cet exemple de réalisation, les aubes de stator 2 à calage variable sont de préférences montées dans un compresseur (non représenté) ou ensemble de compresseur de la turbomachine et sont connues sous le terme de « redresseur » ou de l'acronyme anglais « VSV » pour « Variable Stator Vane ». Les aubes de stator 2 permettent de redresser le flux d'air qui les traverse.

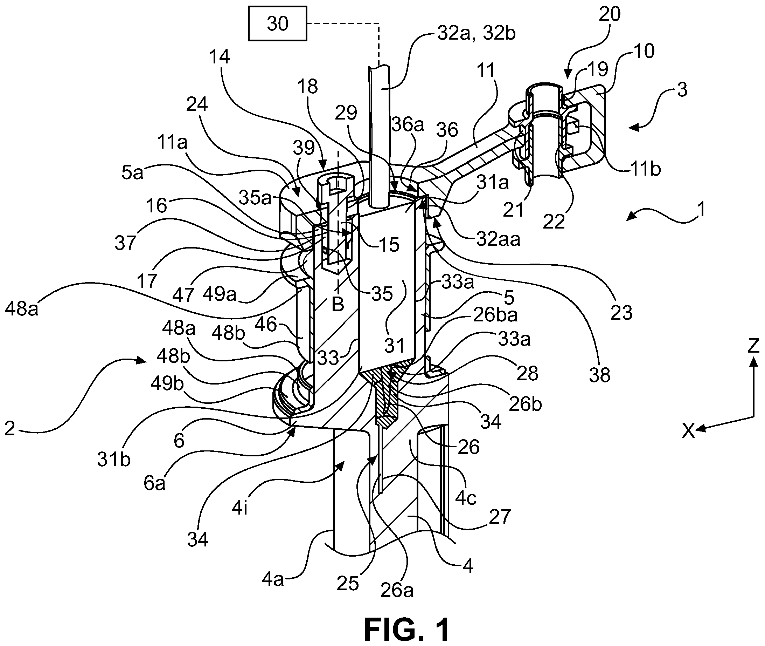

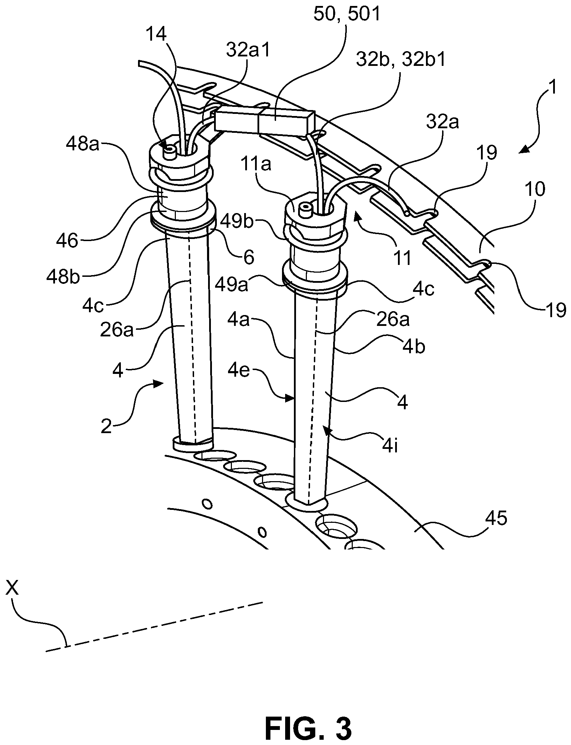

En référence à la figure 1, chaque aube de stator 2 comprend une pale 4 qui s'étend radialement. Chaque pale 4 comprend un bord d'attaque 4a et un bord de fuite 4b qui sont reliés par une surface extrados 4e (cf. figure 3) et une surface intrados 4i.

Chaque aube de stator 2 comprend un pivot 5 qui s'étend radialement depuis une extrémité 4c de la pale 4. Le pivot 5 est monté pivotant autour d'un axe de calage A. L'axe de calage A s'étend sensiblement parallèlement à l'axe radial Z. L'axe de calage A peut présenter une inclinaison par rapport à l'axe radial Z.

La pale 4 et le pivot 5 sont reliés par une platine 6 laquelle peut être optionnelle. De manière avantageuse, le pivot 5 est monté dans un logement 7 correspondant d'un carter externe 8 (représenté sur la figure 2) de la turbomachine. Le carter externe 8 est avantageusement centré sur l'axe longitudinal X. Le carter peut être formé d'au moins deux secteurs autour de l'axe longitudinal (coupés selon le plan XZ et assemblés par exemple par des liaisons boulonnées longitudinales) ou être formé d'une seule pièce annulaire. La platine 6 présente ici une forme circulaire et est destinée à être logée dans un évidement (non représenté) du carter externe 8 de sorte que sa surface interne soit affleurante avec une surface interne du carter externe 8. Cependant, la platine 8 pourrait présenter une autre forme qui n'entrave pas la rotation de l'aube et son agencement par rapport au carter externe 8.

Avantageusement, chaque pivot 5 est relié à un anneau de commande 10 par l'intermédiaire d'un levier 11. Le levier 11 et l'anneau de commande 10 font partie du système de changement de pas 3. L'anneau de commande 10 est destiné à être déplacé en rotation autour de l'axe longitudinal X et à entraîner le changement de calage des aubes de stator 2. La rotation de l'anneau de commande 10 est commandée par exemple par un moyen de commande (non représenté) du système de changement de pas 3. Le moyen de commande est de manière optionnelle un actionneur. Dans le présent exemple de réalisation, il y a au moins un levier 11 pour chaque aube de stator 2 et un unique anneau de commande 10 pour l'ensemble des aubes de stator 2.

Chaque levier 11 s'étend entre une première extrémité 11a et une deuxième extrémité 11b. La première extrémité 11a est solidarisée à une extrémité radialement externe 5a (extrémité libre) d'un pivot 5. A cet effet, la fixation est réalisée au moyen d'au moins un organe de fixation 14. Chaque organe de fixation 14 comprend par exemple, une tige filetée 15 coopérant avec un filetage 16 agencé au niveau de l'extrémité radialement externe 5a. Le filetage 16 peut être porté par une douille filetée 17. La première extrémité 11a est percée d'un premier trou 18 traversant radialement de part et d'autre la paroi du levier 11 et qui est traversé par la tige filetée 15. Avantageusement, cette dernière s'étend radialement. La deuxième extrémité 11b est solidarisée à l'anneau de commande 10.

L'anneau de commande 10 est centré sur l'axe longitudinal X. L'anneau de commande 10 comprend par exemple plusieurs orifices radiaux 19 ou encoches (visible sur les figures 2 et 3) qui sont destinés chacun à coopérer avec des éléments de fixation 20. La deuxième extrémité 11b de chaque levier 11 est également percée d'un deuxième trou 21 coopérant avec les éléments de fixation 20. Les éléments de fixation 20 comprennent par exemple un pion cylindrique 22 qui traverse à la fois le deuxième trou 21 et l'orifice radial 19 correspondant. Chaque levier 11 est apte à pivoter autour de l'axe du pion cylindrique 22.

Chaque aube de stator 2 est équipée de moyens de dégivrage 25 permettant de dégivrer et/ou d'éviter la formation de givre. Les moyens de dégivrage 25 comprennent dans le présent exemple au moins un élément chauffant 26, de préférence électrique.

En référence à la figure 3, chaque élément chauffant 26 comprend avantageusement une première portion 26a qui est montée au sein de la pale 4. La pale 4 peut comprendre une cavité interne 27 qui s'étend radialement et dans laquelle est logée la première portion 26a de l'élément chauffant 26. Cette dernière s'étend avantageusement sur toute la hauteur radiale de la pale 4 de manière à chauffer toute la pale 4. Suivant un exemple de réalisation, la cavité interne 27 présente une forme de serpentin ou de trombone dans laquelle est agencée la première portion 26a. Un courant électrique circulant dans la première portion 26a permet d'élever la température dans la pale 4 ce qui permet d'éviter la formation de givre. La première portion 26a présente une épaisseur transversale comprise à titre d'exemple entre 0,1 m et 10 mm. La première portion 26a se présente comme un fil chauffant.

Chaque élément chauffant 26 comprend une deuxième portion 26b qui s'étend au moins en partie à l'extérieur de la pale 4. De manière avantageuse, la deuxième portion 26b est un prolongement de la première portion 26a. La deuxième portion 26b est avantageusement, mais non limitativement, revêtue d'un matériau conducteur électrique 28 de manière à transmettre efficacement la chaleur générée dans cette deuxième portion 26b de l'élément chauffant 26 et d'éviter une montée en température. Le matériau conducteur électrique 28 est disposé de telle sorte à augmenter le diamètre ou section transversale de l'élément chauffant 26 depuis la jonction avec la première portion 26a jusqu'à une extrémité 26ba opposée de la deuxième portion 26b. Chaque deuxième portion 26b est considérée comme étant la partie froide de l'élément chauffant 26 et chaque première portion 26a est considérée comme étant la partie chaude de l'élément chauffant 26.

A titre d'exemple, le diamètre maximal de la deuxième portion 26b peut être comprise entre 0,3 mm et 10 mm, de préférence 3 mm. Le matériau conducteur électrique 28 peut être de la magnésie. Cette dernière se présente sous la forme d'une poudre qui est compactée et appliquée pour former le matériau conducteur électrique et l'isolation de l'élément chauffant.

L'élément chauffant 26 est relié à un dispositif de connexion électrique 29. En particulier, le dispositif de connexion électrique 29 comprend une source d'alimentation 30 électrique qui peut être une batterie ou une machine électrique ou encore un alternateur (qui fonctionne grâce à la turbomachine). Le dispositif de connexion électrique 29 comprend au moins un boîtier de connexion 31 configuré pour protéger la fixation entre la deuxième portion et un harnais d'alimentation décrit ci-après. La fixation peut être réalisée par une soudure par exemple. Dans le présent exemple, chaque deuxième portion 26b est couplée à un boîtier de connexion 31 qui la relie à la source d'alimentation 30 électrique. En d'autres termes, il y a autant de boîtiers de connexion 31 que d'aubes de stator 2. Les boîtiers de connexion 31 sont situés à l'extérieur des aubes de stator 2. Suivant un agencement optionnel, la deuxième porion 26b de l'élément chauffant 26 (en particulier son extrémité) est frettée sur le boîtier de connexion 31.

De manière avantageuse, chaque boîtier de connexion 31 est une seule pièce, ce qui permet de faciliter le montage dans le pivot 5 et de fiabiliser la circulation du courant électrique.

Suivant un exemple de réalisation, chaque boîtier de connexion 31 est de forme cylindrique, de préférence droit, et comprend une enveloppe extérieure réalisée par exemple dans un matériau métallique. L'enveloppe protège la fixation entre l'élément chauffant 26 et les câbles ou harnais d'alimentation. Le boîtier de connexion comprend un matériau de comblement, par exemple de la magnésie (qui est sous forme de poudre compactée) qui remplit l'intérieur de l'enveloppe et protège les portions de câble, d'éléments chauffant et la fixation. Le matériau de comblement peut comprendre de la résine disposée aux extrémités de chaque boîtier de connexion 31.

Chaque boîtier de connexion 31 est couplée à au moins un harnais d'alimentation 32a, 32b dans lesquels circule le courant électrique. Le harnais est à cet effet couplé à la source d'alimentation 30. De préférence, il y a deux harnais d'alimentation 32a, 32b qui comprennent chacun une première extrémité 32aa couplée à la deuxième extrémité 26ba de la deuxième portion 26b d'un élément chauffant 26 dans le même boîtier de connexion 31. Chaque harnais d'alimentation 32a, 32b présente une section transversale qui est supérieure à une section transversale de l'élément chauffant 26, et en particulier de la deuxième portion 26b. Les harnais sont « pliés » sur des rayons plus longs. En effet, chaque harnais d'alimentation 32a, 32b comprend une gaine de protection qui apporte de la rigidité aux harnais. En effet, chaque harnais comprend par exemple en son sein un élément conducteur enveloppé par des couches métalliques qui forment la gaine de protection. Les couches métalliques se comportent comme un renfort mécanique (empêche le conducteur au centre d'être trop sollicité) et contre un blindage contre les décharges électriques (fuite de courant). A titre d'exemple, le diamètre ou section transversale du harnais d'alimentation est égale à au moins deux fois le diamètre du diamètre maximal de l'élément chauffant.

Chaque pivot 5 comprend un alésage principal 33 qui s'étend radialement à l'intérieur de celui-ci. Dans le présent exemple, chaque alésage principal 33 comprend un axe coaxial à l'axe de calage A de l'aube. Alternativement, l'axe de chaque alésage principal 33 peut être incliné par rapport à l'axe de calage A ou encore être parallèle à l'axe de calage A. La configuration de l'alésage principal dépendra par exemple de plusieurs éléments de conception et/ou de la fixation du système de changement de pas. De manière avantageuse, mais non limitativement, l'alésage principal 33 débouche à l'extrémité radialement externe 5a de chaque pivot 5. L'alésage principal 33 débouche également dans cet exemple dans la cavité interne 27 ménagée dans la pale 4 ce qui permet le cheminement de l'élément chauffant 26 dans et à l'extérieur de la pale 4 (dans le pivot).

Comme cela est visible sur la figure 1, le ou chaque boîtier de connexion 31 est logé dans un alésage principal 33 de manière à être solidaire en rotation du pivot 33. De manière avantageuse, mais non limitativement, chaque boîtier de connexion 31 est fixé à la face interne 33a de l'alésage principal 33 au moyen d'une colle, ou d'une soudure. Cela permet de préserver l'intégrité physique du boîtier de connexion 31 et de ses connexions électriques avec l'élément chauffant 26 et le ou chaque harnais d'alimentation 32a, 32b. Cette configuration permet également de réduire l'encombrement à l'extérieur des aubes de stator 2 et les interactions avec le système de changement de pas 3. Chaque boîtier de connexion 31 présente une forme complémentaire et épousant celle de la face interne 33a de l'alésage principal 33. L'alésage principal 33 présente ici une section radiale circulaire qui n'est pas limitative. Avantageusement, chaque boîtier de connexion 31 présente un corps cylindrique qui s'étend entre une première extrémité 31a et une deuxième extrémité 31b.

La deuxième portion 26b prolongeant la première portion 26a de l'élément chauffant 26 est également logée dans l'alésage principal 33. De la sorte, la première partie 26a et la deuxième portion 26b d'un élément chauffant 26 sont intégrées en totalité dans chaque aube de stator 2 ce qui évite que l'élément chauffant 26 ne soit sollicité mécaniquement lors du changement de calage de l'aube de stator 2. De plus l'intégration totale de l'élément chauffant 26 dans l'aube de stator 2 améliore le transfert de chaleur vers la première portion 26a de l'élément chauffant 26 ce qui atténue la limitation imposée sur la puissance électrique de l'entièreté de l'élément chauffant 26. Cette configuration permet également de réduire davantage l'encombrement à l'extérieur des aubes de stator 2 et les interactions avec le système de changement de pas 3.

Un matériau de comblement 34 est prévu pour combler une portion 33a de l'alésage principal 33 situé radialement en dessous du boîtier de connexion 31 qui n'occupe pas l'alésage principal 33 dans sa totalité. Avantageusement, la jonction de la deuxième portion 26b et de la première portion 26a, et l'extrémité de la deuxième portion 26b de l'élément chauffant 26 qui est couplée avec les harnais dans le boîtier de connexion 31 s'étendent dans la portion 33a de l'alésage principal 33. En d'autres termes, le matériau de comblement enrobe chaque deuxième portion 26b dans la portion 33a de l'alésage principal 33 et vient en contact avec la deuxième extrémité du boîtier de connexion 31 et une portion de la face interne de l'alésage principal 33. Suivant un exemple de réalisation, le matériau de comblement 34 est conducteur. Le matériau de comblement peut comprendre une colle chargée en alumine sous forme de micro particules. Les micro particules forment par exemple des ponts thermiques et améliorent grandement la conductivité des colles. De la sorte, la dissipation de chaleur vers l'extérieur est amplifiée à son maximum pour éviter une montée en température de l'élément chauffant et du matériau de comblement 34 à l'intérieur de l'aube de stator 2.

Au moins une partie du ou de chaque harnais 32a, 32b s'étend au moins en partie dans l'alésage principal 33. Les interactions du ou de chaque harnais 32a, 32b avec le système de changement de pas 3 sont également réduites du fait de leur intégration au moins partielle. L'effort mécanique lors du changement de calage des aubes de stator 2 est reporté sur le ou les harnais 32a, 32b qui sont beaucoup plus robustes que l'élément chauffant 26 notamment de la deuxième portion 26b malgré son matériau conducteur électrique 28.

Dans le présent exemple et sur la figure 1, chaque pivot 5 comprend également un perçage 35 qui présente un axe B parallèle à l'axe de l'alésage principal 33. En d'autres termes, le perçage 35 est décalé par rapport à l'alésage principal 33. Chaque perçage 35 est borgne et débouche à l'extrémité radialement externe 5a du pivot 5. La tige filetée 15 de chaque organe de fixation 14 s'étend dans le perçage 35. Par ailleurs, chaque douille filetée 17 qui est destinée à se visser sur la tige filetée 15 est sertie à la face interne 35a du perçage 35. La tige filetée 15 s'étend au moins en partie dans le perçage 35 ainsi que la douille filetée 17. Le décalage de la fixation de chaque levier 11 à un pivot 5 permet la mise en place de l'alésage principal 33 et l'installation du boîtier de connexion 31 dans le pivot 5.

Chaque levier 11 comprend en outre un orifice 36 qui traverse la paroi du levier 11 de part et d'autre radialement. L'orifice 36 est destiné à être positionné en regard de l'alésage principal 33. Le ou chaque harnais 32a, 32b s'étend à travers l'orifice 36.

Avantageusement, chaque levier 11 comprend avantageusement, mais non limitativement, un évidement 37 qui débouche sur une surface interne 23 du levier 11. Le premier trou 18 et l'orifice 36 débouchent par exemple dans cet évidement 37. En d'autres termes, l'évidement 37 est situé à la première extrémité 11a de chaque levier 11. Chaque évidement 37 forme une surface de butée 38 contre laquelle vient en butée la bordure 39 de l'extrémité radialement externe 5a du pivot 5. Chaque extrémité radialement externe 5a du pivot 5 est logée et entourée au moins en partie par l'évidement 37. Cela permet un meilleur centrage, précision de positionnement, et maintien en position des pivots sur les leviers 11.

La figure 2 illustre un autre mode de réalisation de la liaison entre le système de changement de pas 3 et chaque pivot 5. Ce mode de réalisation diffère de celui de la figure 1 en ce qu'il est dépourvu d'une liaison boulonnée et du premier trou 18. En particulier, chaque organe de fixation 14 comprend ici un anneau de rétention 40, tel un circlip, engagé dans une gorge 41 annulaire d'un pivot 5. La gorge 41 annulaire est centrée sur l'axe de calage A du pivot 5 et débouche sur la surface externe 5c du pivot 5. Avantageusement, l'anneau de rétention 40 vient en butée radiale contre la face interne 36a de l'orifice 36 de chaque levier 11. Cette configuration permet de solidariser en rotation chaque pivot 5 à un levier 11. Par ailleurs, l'anneau de rétention 40 permet de limiter l'encombrement radial du pivot et/ou de la première extrémité 11a du levier.

Chaque organe de fixation 14 comprend également une surface d'appui 42 portée par le pivot 5 et destinée à être liaison appui plan avec la surface de butée 38 du levier 11. Dans le présent exemple, chaque pivot 5 comprend un épaulement 43 qui définit la surface d'appui 42 laquelle est également définie dans un plan perpendiculaire à l'axe de calage A. L'épaulement 43 définit également un changement de section du pivot 5 au niveau de son extrémité radialement externe 5a. De la sorte, chaque pivot 5 comprend par exemple une première partie 44a présentant un premier diamètre et une deuxième partie 44b présentant un deuxième diamètre différent (de préférence inférieur) du premier diamètre. La gorge 41 annulaire est creusée dans la paroi de la deuxième partie 44b. La surface d'appui 42 vient en appui contre la surface de butée 38 lors de la fixation du levier 11 et du pivot 5. Dans cet exemple de réalisation, seul l'orifice 36 débouche dans l'évidement 37. Cette configuration permet de maintenir en place le levier 11 sur le pivot 5.

La figure 3 illustre plus en détails des aubes de stator 2 agencées autour de l'axe longitudinal X et qui s'étendent radialement depuis une virole annulaire 45 centrée de préférence sur l'axe longitudinal X. Le carter externe 8 (non représenté sur cette figure) opposé radialement à la virole annulaire 45 comprend les logements recevant les pivots 5 des aubes de stator 2.

Les pivots 5 peuvent être montés chacun dans une douille cylindrique 46. Pour cela, chaque douille cylindrique 46 comprend un alésage 47 (visible sur la figure 1) qui est coaxial à l'axe de calage A en situation d'installation. Chaque pivot 5 traverse l'alésage 47 correspondant. De manière avantageuse, mais non limitativement, il y a un jeu, entre le diamètre externe du pivot et le diamètre interne de la douille. Dans l'exemple représenté, chaque douille cylindrique 46 est formée de deux parties. Bien entendu, chaque douille cylindrique 46 peut être formée en une seule pièce. Chaque partie de douille s'étend entre une première extrémité 48a et une deuxième extrémité 48b. Chaque partie comprend une collerette 49a, 49b qui s'étend radialement vers l'extérieur d'une des première et deuxième extrémités. Chaque douille cylindrique 46 est également montée dans le logement du carter externe 8. De la sorte, la collerette 49a de la première partie repose sur une surface externe de la paroi du carter externe tandis que la collerette 49b de la deuxième partie repose sur une surface externe (opposée à la surface interne) de la platine 6. En variante, les douilles 46 sont dépourvues de collerette.

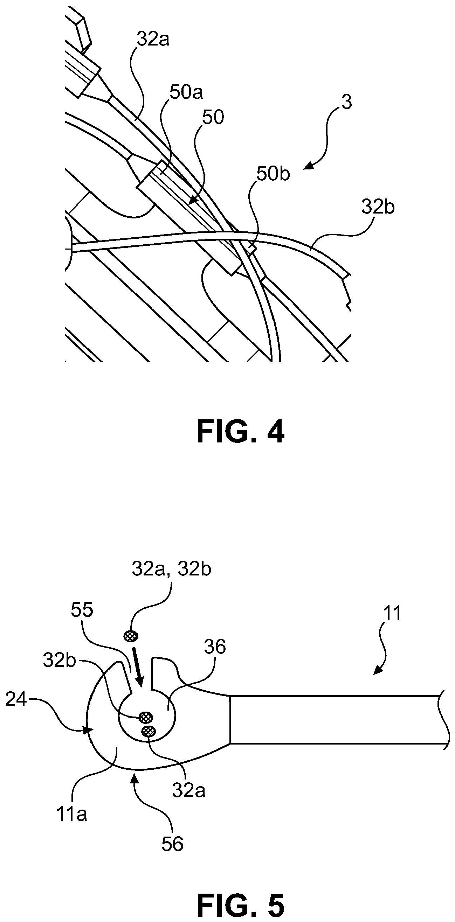

Comme énoncé précédemment et illustrés sur les figures 3 et 4, il y a deux harnais 32a, 32b qui sont reliés électriquement à un boîtier de connexion 31 logé dans chaque pivot 5 d'une aube de stator. Chaque couple de harnais 32a, 32b s'étend vers l'extérieur de l'aube de stator 2 en traversant l'orifice 36 du levier 11. Chaque harnais est également relié à un autre harnais d'un des autres boîtiers de connexion 31 via un connecteur 50. En particulier, la deuxième extrémité d'un premier harnais 32a1 couplé à un premier boîtier de connexion 31 est accouplée à un premier connecteur 501. La deuxième extrémité d'un deuxième harnais 32b1 couplé à un deuxième boîtier de connexion, est accouplée au même premier connecteur 501. Un troisième harnais couplé au deuxième boîtier de connexion est relié à un deuxième connecteur accouplé au quatrième harnais couplé à un troisième boîtier de connexion, et ainsi de suite. Les harnais de deux aubes de stator 2 adjacentes sont reliés par un connecteur. Toutefois, les aubes de stator 2 adjacentes ne sont pas forcément connectées les unes aux autres. De manière générale, les aubes de stator sont connectées les unes aux autres en série ou en boucle. En connectant les aubes de stator en série (par exemple, aube de stator i connectée à l'aube de stator i+3 ), et en cas de panne sur une des boucles, la formation de masse de glace sur une partie importante de la grille d'aubes de stator 2 est évitée. Chaque aube de stator 2 en panne/ « non anti-givrée » sera entourée de deux aubes de stator « antigivrées (avec les éléments chauffants qui fonctionnent) ».

Suivant un mode de réalisation, chaque connecteur 50 comprend une partie mâle et une partie femelle lesquelles comprennent des moyens d'accouplement complémentaire.

Suivant le mode de réalisation de la figure 4, chaque connecteur 50 est une unique pièce. Les harnais sont connectés à chacune de ses extrémités 50a, 50b.

La figure 5 illustre un mode de réalisation d'un levier 11. Le levier 11 comprend une gorge 55 qui traverse la paroi du levier 11 de part et d'autre transversalement. Chaque gorge 55 débouche d'une part sur une surface latérale périphérique 56 du levier 11 et dans l'orifice 36. En d'autres termes, chaque gorge 55 est ménagée au niveau de la première extrémité du levier 11. La gorge 55 débouche également sur la surface interne et une surface externe 24 opposée suivant l'axe radial. Une telle gorge 55 permet de faciliter l'insertion des harnais à travers l'orifice 36 lors du montage de l'ensemble.

De la sorte, l'intégration de la majorité de la connectique (élément chauffant et boitier de connexion) dans un alésage 33 creusé à l'intérieur des pivots 5 permet de limiter fortement les sollicitations dans l'élément chauffant 26 qui est solidaire de l'aube de stator 2 lors de son déplacement en rotation. Il y a une meilleure jonction thermique dans l'élément chauffant 26 et l'encombrement de la connectique vis-à-vis du système de changement de pas est réduit. L'ensemble se monte et se démonte plus facilement sur le carter.

## Revendications

1. Ensemble de turbomachine d'axe longitudinal (X), en particulier d'aéronef, comprenant :
- une aube de stator (2) à calage variable comportant une pale (4) et un pivot (5) s'étendant radialement depuis une extrémité (4c) de la pale (4),
- un système de changement de pas (3) configuré de manière à changer le calage de l'aube de stator (2) autour de son axe de calage (A), le pivot (5) étant relié au système de changement de pas (3), et
- un élément chauffant (26) comprenant une première portion (26a) montée au sein de la pale (4) et une deuxième portion (26b) reliée à une source d'alimentation électrique (30) d'un dispositif de connexion électrique (29),
**caractérisé en ce que** le dispositif de connexion électrique (29) comprend un boîtier de connexion (31) reliant la deuxième portion (26b) à au moins un harnais d'alimentation (32a, 32b) qui est couplé à la source d'alimentation électrique (30) et **en ce que** le pivot (5) comprend un alésage principal (33) dans lequel sont logés d'une part le boîtier de connexion (31) de manière à être solidaire en rotation du pivot (5) et d'autre part la deuxième portion (26b) prolongeant la première portion (26a) de l'élément chauffant (26).

2. Ensemble selon la revendication 1, **caractérisé en ce que** le système de changement de pas (3) comprend un anneau de commande (10) et au moins un levier (11) qui est solidarisé à une extrémité radialement externe (5a) du pivot (5) au moyen d'au moins un organe de fixation (14) et qui est relié à l'anneau de commande (10), l'anneau de commande (10) étant destiné à être déplacé en rotation autour de l'axe longitudinal X et à entraîner le changement de calage des aubes de stator (2).

3. Ensemble selon la revendication précédente, **caractérisé en ce que** le harnais d'alimentation (32a, 32b) s'étend au moins en partie dans l'alésage principal (33) et traverse un orifice (36) du levier (11), le harnais d'alimentation (32a, 32b) présentant une section transversale égale à au moins deux fois une section transversale maximale de la deuxième partie (26b) de l'élément chauffant (26).

4. Ensemble selon l'une des revendications précédentes, **caractérisé en ce que** l'élément chauffant (26) est un fil chauffant et la deuxième portion (26b) de l'élément chauffant comprend le fil chauffant recouvert d'un matériau conducteur électrique (28).

5. Ensemble selon l'une des revendications 2 à 4, **caractérisé en ce que** le pivot (5) comprend un perçage (35) s'étendant suivant un axe parallèle à l'axe de l'alésage principal (33), l'organe de fixation (14) comprenant une tige filetée (15) s'étendant au moins en partie dans le perçage (35) et une douille filetée (17) solidarisée à une face interne (35a) du perçage (35).

6. Ensemble selon l'une des revendications 3 à 4, **caractérisé en ce que** le pivot (5) comprend une gorge annulaire (41) centrée sur l'axe de calage (A) dans laquelle est engagé un anneau de rétention (40) qui est également en butée radiale contre la face interne (36a) de l'orifice (36) du levier (11).

7. Ensemble selon l'une quelconque des revendications précédentes, **caractérisé en ce qu'**un matériau de comblement (34) occupe une portion (33a) de l'alésage principal (33) s'étendant radialement en-dessous du boîtier de connexion (31) et dans lequel s'étend la deuxième portion (26b) de l'élément chauffant (26).

8. Ensemble selon l'une quelconque des revendications 3 à 7, **caractérisé en ce que** le levier (11) comprend une gorge (55) traversant sa paroi de part et d'autre radialement au niveau de sa première extrémité (11a) et qui est destinée à déboucher dans l'orifice (36) et à être traversée par le harnais d'alimentation (32a, 32b).

9. Ensemble selon l'une quelconque des revendications précédentes, **caractérisé en ce qu'**il comprend une pluralité d'aubes de stator (2) à calage variable disposées autour de l'axe longitudinal (X), chacun des pivots (5) étant relié à l'anneau de commande (10) et **en ce que** le dispositif de connexion (29) comprenant plusieurs boîtiers de connexion (31) reliant électriquement chacun une deuxième portion (26b) d'un élément chauffant (26) et au deux harnais d'alimentation (32a, 32b), chaque harnais d'alimentation étant relié à un autre harnais d'alimentation d'un des boîtiers de connexion (31) via un connecteur (50).

10. Turbomachine (1) comprenant un ensemble selon l'une quelconque des revendications précédentes.
